# EUROPEAN PATENT SPECIFICATION

(11) **EP 4 254 942 B1**
(45) Date of publication and mention of the grant of the patent: **29.04.2026**
(21) Application number: 22767390.2
(22) Date of filing: 02.03.2022
(51) Int. Cl.: H04N 7/14, H04N 5/265, G06T 7/20, G06T 7/136, G06T 17/00

(54) **ELECTRONIC DEVICE FOR PROVIDING VIDEO CONFERENCE, AND METHOD THEREFOR**
ELEKTRONISCHE VORRICHTUNG ZUR BEREITSTELLUNG EINER VIDEOKONFERENZ UND VERFAHREN DAFÜR
DISPOSITIF ÉLECTRONIQUE PERMETTANT DE RÉALISER UNE VIDÉOCONFÉRENCE, ET PROCÉDÉ ASSOCIÉ

(30) Priority: 08.03.2021 KR 20210030311
(43) Date of publication of application: 04.10.2023
(73) Proprietor: Samsung Electronics Co., Ltd., Suwon-si, Gyeonggi-do 16677 (KR)
(72) Inventor: SEOC, Hoyoung, Suwon-si Gyeonggi-do 16677 (KR)
(74) Representative: HGF
(86) International application number: PCT/KR2022/002947
(87) International publication number: WO 2022/191494

(56) References cited:
- JP-A- 2011 217 098
- KR-A- 20130 042 915
- KR-A- 20170 128 498
- US-A1- 2004 202 381
- US-A1- 2015 077 504
- US-A1- 2018 131 878
- US-A1- 2020 380 985

## Description

### [Technical Field]

The disclosure relates to an electronic device for sharing images. More particularly, the disclosure relates to an electronic device and method for providing a video conference service.

### [Background Art]

Recently, due to the increase in a proportion of remote work and the development of high-speed wireless communication networks, the range of use of remote video conference technology has increased. Technologies related to a remote video conference aim to deliver clearly and quickly a user's video and audio information to conference participants, and aim at a system in which tens to hundreds of participants may participate according to the service. Further, the technologies provide a function of sharing various additional contents such as videos and data, rather than simply transmitting a video input to a camera.

US2018131878A1 relates to presentation of modified objects within a video stream. A selection is received at a user interface of a computing device and determine a modifier context based at least in part on the selection and a position within the user interface. At least one set of modifiers is identified based on the modifier context. An order for the set of modifiers is determined based on the modifier context and modifier icons are presented for the set of modifiers within the user interface.

US2020380985A1 relates to voice-control for electronic devices. A method includes, in response to detecting a plurality of utterances, associating the plurality of operations with a first stored operation set and detecting a second set of one or more inputs corresponding to a request to perform the operations associated with the first stored operation set; and performing the plurality of operations associated with the first stored operation set, in the respective order.

### [Disclosure of Invention]

### [Technical Problem]

During online communication (hereinafter, referred to as a video conference) that shares screens, such as video conferences, online classes, and video calls, it is difficult that viewers who receive information through video or objects point a specific part of an object showed on the screen and give quick and accurate feedback through a voice or text. For example, in the case of sharing a video on the electronic device side of a user (hereinafter, referred to as a host) sharing multimedia such as video images, which are data, only the host can control the multimedia and point an area by moving a cursor or pointer, but it may be difficult that conference participants (hereinafter, referred to as guests) other than the host quickly point a specific area of the video with a text or voice. Further, in the case of conducting a conversation through an object (e.g., in the case of sharing a video of a specific object), the host may be able to communicate smoothly by directly pointing the object being shared on the screen, but it may be difficult that the guests may quickly and accurately point specific areas of the object to give feedback, which may lead to errors of understanding.

### [Solution to Problem]

In accordance with an aspect of the invention, an electronic device is provided as defined in claim 1.

In accordance with another aspect of the invention, a method for an electronic device to share a video image is provided as defined in claim 14.

### [Advantageous Effects of invention]

According to various embodiments disclosed in this document, it is possible to provide an efficient untact communication solution based on an electronic device because immediate and accurate online communication is possible.

An electronic device according to various embodiments disclosed in this document enables more accurate situational awareness among users by providing a tool capable of pointing each part of an image shared in a remote communication situation using a video conference service, provides a user experience close to an offline communication situation, and reduces the psychological discomfort and burden of video conferencing service users, thereby expecting efficient communication.

### [Brief Description of Drawings]

In connection with the description of the drawings, the same or similar reference numerals may be used for the same or similar elements.
FIG. 1 is a block diagram illustrating an electronic device in a network environment according to an embodiment of the disclosure.
FIG. 2 illustrates an electronic device and a plurality of external electronic devices that communicatively establish a connection with the electronic device according to an embodiment of the disclosure.
FIG. 3 is a block diagram illustrating an electronic device for providing a video conference according to an embodiment of the disclosure.
FIG. 4 illustrates a first image and a second image according to an embodiment of the disclosure.
FIG. 5 is a flowchart illustrating operation for providing a video conference by an electronic device according to an embodiment of the disclosure.
FIGS. 6A, 6B, and 6C illustrate generating a second image corresponding to a partial area of a first image according to various embodiments of the disclosure.
FIG. 7 is a flowchart illustrating operation of generating a second image by an electronic device according to an embodiment of the disclosure.
FIG. 8 illustrates an example in which an electronic device detects a plurality of image objects from a first image according to an embodiment of the disclosure.
FIGS. 9A, 9B, and 9C illustrate an example in which an electronic device generates a second image based on a target image object according to various embodiments of the disclosure.
FIG. 10 is a flowchart illustrating operation of generating a fourth image by an electronic device according to embodiment of the disclosure.
FIGS. 11 and 12 illustrate a fourth image according to various embodiments of the disclosure.

### [Mode for the Invention]

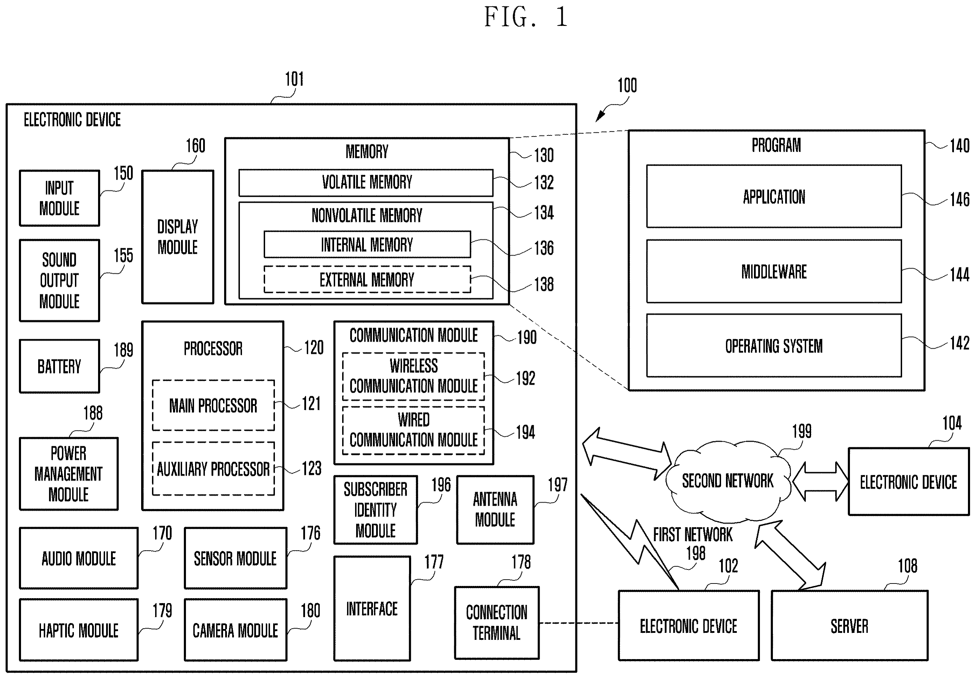

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module(SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 includes a display and control circuitry to control the display. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

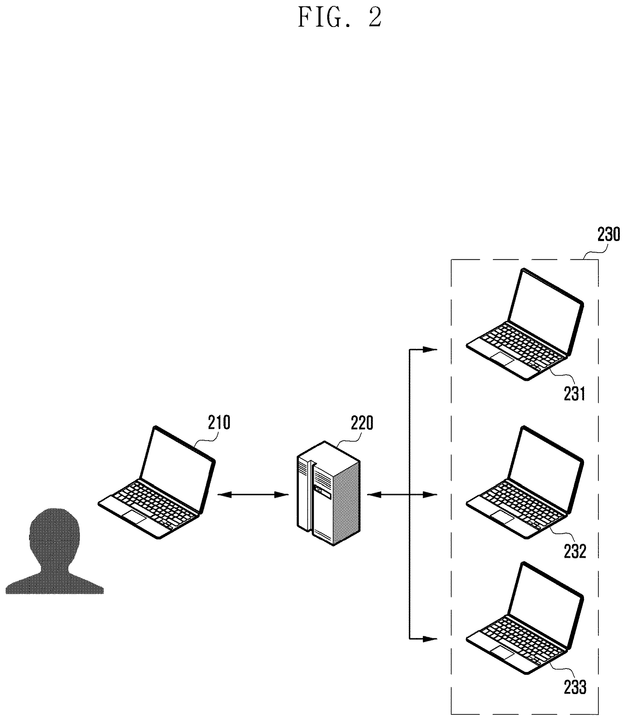

FIG. 2 illustrates an electronic device 210 and a plurality of external electronic devices 220 and 230 that communicatively establish a connection with the electronic device according to an embodiment of the disclosure.

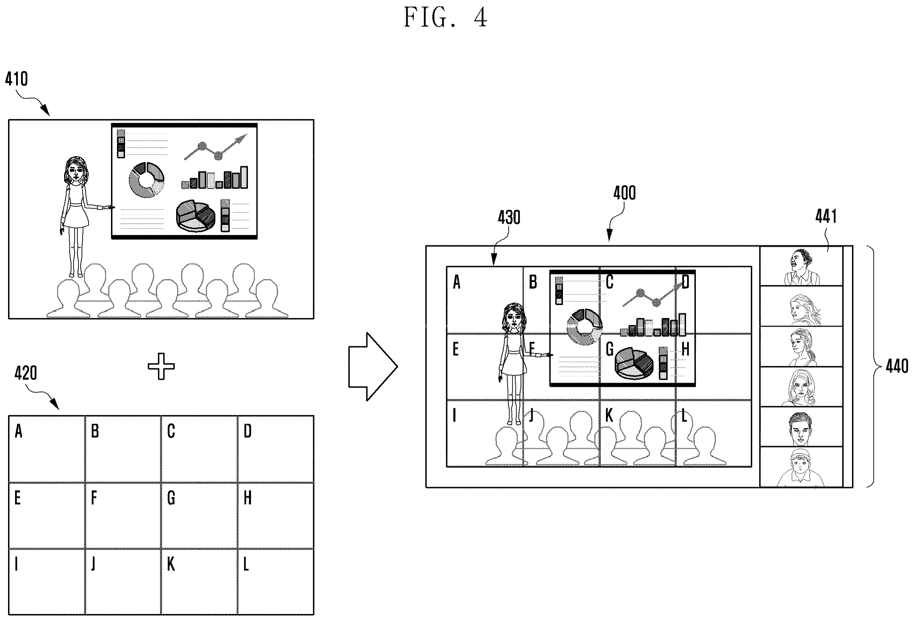

Referring to FIG. 2, the electronic device 210 (e.g., the electronic device 101 of FIG. 1) may establish communicatively a connection with a plurality of external electronic devices (e.g., a server device 220 (e.g., the server 108 of FIG. 1), an external electronic device 230 (e.g., the external electronic device 104 of FIG. 1)). According to various embodiments, the electronic device 210 may be implemented into an electronic device such as a smart phone or tablet personal computer (PC), but it is not limited thereto and various types of devices having a communication function (e.g., wired communication and/or wireless communication) may correspond to the electronic device 210 according to various embodiments of this document. According to various embodiments, the electronic device 210 may communicate with the server device 220 and/or the external electronic device 230 using wired and/or wireless network communication (e.g., the second network 199 of FIG. 1). Wired and/or wireless network communication may be performed using a wide area network (e.g., cellular network, LAN). According to an embodiment, the electronic device 210 may be a device of a host hosting a video conference. For example, the electronic device 210 may share multimedia data (e.g., a first image 410 of FIG. 4) such as a video image for providing a video conference with the external electronic device 230. The electronic device 210 may generate and/or execute multimedia data and display multimedia data using a display device (e.g., the display module 160 of FIG. 1). Further, the electronic device 210 may transmit multimedia data to the server device 220 and/or the external electronic device 230. According to various embodiments, the electronic device 210 may receive data from the external electronic device 230 and/or the server device 220. According to an embodiment, the electronic device 210 may receive multimedia data (e.g., a participant image 440 of FIG. 4) such as a video image transmitted by the external electronic device 230. According to an embodiment, the electronic device 210 may receive various data such as a request signal transmitted by the external electronic device 230. According to an embodiment, the electronic device 210 may receive data transmitted by the external electronic device 230 from the server device 220.

According to various embodiments, the server device 220 may transmit and receive data for providing a video conference to and from the electronic device 210 and/or the external electronic device 230. According to an embodiment, the server device 220 may receive data that the electronic device 210 intends to transmit to the external electronic device 230, temporarily or permanently store the data, and transform or process the received data. According to an embodiment, the server device 220 may equally perform all or part of operations performed by the electronic device 210 in order to provide a video conference.

According to various embodiments, the external electronic device 230 may transmit and receive data for providing a video conference to and from the electronic device 210 and/or the server device 220. According to an embodiment, the external electronic device 230 may receive multimedia data transmitted by the electronic device 210. The external electronic device 230 may be, for example, a guest's electronic device. According to an embodiment, there may be a plurality of guests, and a plurality of external electronic devices 230 may exist. Each of a plurality of external electronic devices 231, 232, and 233 may independently establish a communication connection with the server device 220 and/or the electronic device 210. According to an embodiment, the external electronic device 230 may equally perform all or some of operations performed by the electronic device 210 in order to provide a video conference.

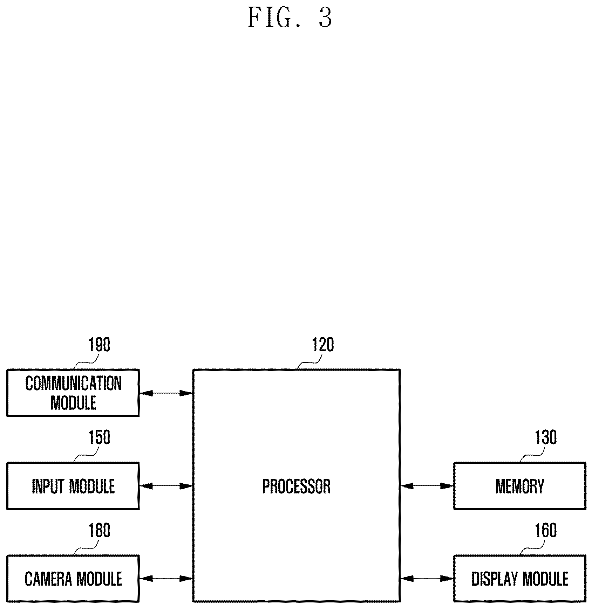

FIG. 3 is a block diagram illustrating an electronic device for providing a video conference according to an embodiment of the disclosure.

Referring to FIG. 3, the electronic device 101 may include a memory 130, an input module 150, a display module 160, a camera module 180, a communication module 190, and/or a processor 120. The electronic device 101 may include at least some of the constitutions and/or functions of the electronic device 101 of FIG. 1.

According to various embodiments, the memory 130 is for temporarily or permanently storing digital data, and may include at least some of the constitutions and/or functions of the memory 130 of FIG. 1. Further, the memory 130 may store at least a portion of the program 140 of FIG. 1. The memory 130 may store various instructions that may be executed by the processor (e.g., the processor 120 of FIG. 3). These instructions may include control commands such as logic operations and data input/output that may be recognized and executed by the processor 120. A type and/or amount of data that may be stored in the memory 130 will not be limited, but in this document, and only constitutions and functions of the memory related to a method of providing a video conference according to various embodiments and operations of the processor 120 for performing the method will be described.

The input module 150 may receive a command or data to be used for a component (e.g., the processor 120) of the electronic device 101 from the outside (e.g., user) of the electronic device 101. The input module 150 may include, for example, a microphone, a mouse, a keyboard, a key (e.g., button), or a digital pen (e.g., stylus pen). According to an embodiment, the input module 150 may receive an input from the user. According to an embodiment, the input module 150 may receive a user's input (e.g., click, dragging, pointing) on multimedia data (e.g., the first image 410 of FIG. 4) output to the display module 160.

The display module 160 may display information to the outside of the electronic device 101. The display module 160 may include at least some of the constitutions and/or functions of the display module 160 of FIG. 1. According to various embodiments, the display module 160 may visually display information received from the processor 120.

According to various embodiments, the camera module 180 may capture an image and/or video of an external environment of the electronic device 101. The camera module 180 may include at least a portion of the constitutions and/or functions of the camera module 180 of FIG. 1. According to various embodiments, the camera module 180 may convert light incident from the outside into an electrical signal to generate image information. According to various embodiments, the camera module 180 may capture an external environment of the electronic device 101 and generate image information acquired by capturing a peripheral environment.

According to various embodiments, the communication module 190 may communicate with an external electronic device (e.g., the external electronic device 230 or the server device 220 of FIG. 2) using wired and/or wireless network communication (e.g., the second network 199 of FIG. 1). Wired and/or wireless network communication may be performed using a wide area network (e.g., cellular network, LAN). There is no limitation on long distance communication supported by the communication module 190, and long distance communication may support various communication methods such as cellular networks (e.g., 5G, long term evolution advanced (LTE-A)), LAN, and Internet. According to various embodiments, the communication module 190 may receive various data for providing a video conference service from the external device (e.g., the external electronic device 230 and/or the server device 220 of FIG. 2).

According to various embodiments, the processor 120 may process calculations or data related to control and/or communication of each component of the electronic device 101. The processor 120 may include at least some of the constitutions and/or functions of the processor 120 of FIG. 1. The processor may be operatively, electrically, and/or functionally connected with components of the electronic device 101 such as the communication module 190, the input module 150, the display module 160, the camera module 180, and/or the memory 130. Each operation of the processor 120 according to various embodiments may be performed in real time. For example, information transmission between the electronic device 101, an external electronic device (e.g., the external electronic device 230 of FIG. 2) and/or a server (e.g., the server device 220 of FIG. 2) may be performed simultaneously or within a negligibly small time range, and accordingly, calculations and/or operations for providing a video conferencing service of the processor 120 may also be performed simultaneously or within a very small time range. There will be no limitation on types and/or amounts of operations, calculations, and data processing that the processor 120 may perform, but in this document, only constitutions and functions of the processor 120 related to a method of providing a video conferencing service and operation performing the method according to various embodiments will be described.

According to various embodiments, the processor 120 may share the first image (e.g., the first image 410 of FIG. 4). The first image 410 may be data shared by the electronic device 101 in order to provide a video conference service. For example, the first image 410 may be image data such as a video image or a presentation material. According to an embodiment, the first image 410 may be an image captured by the camera module 180 of the electronic device 101. According to an embodiment, the first image 410 may be multimedia data stored in the memory 130 and executed by the processor 120. For example, the first image 410 may be a moving image. According to an embodiment, the processor 120 may display the first image 410 using the display module 160. The first image 410 may be, for example, all or part of image data displayed by the display module 160. According to an embodiment, the processor 120 may control the communication module 190 to transmit the first image 410 to the server device (e.g., the server device 220 of FIG. 2) and/or the external electronic device 230.

According to the invention, the processor 120 selects at least a partial area (e.g., first area) of the first image 410. According to an embodiment, the first image 410 may include at least one image object in at least a partial area. For example, the selected area may be an area in which at least one image object included in the first image 410 exists. According to various embodiments, the processor 120 may perform image analysis on the first image 410. According to an embodiment, the processor 120 may use at least one algorithm stored in the memory 130 in order to perform image analysis. According to an embodiment, the processor 120 may analyze an image included in the image information to identify at least one image object included in the image. At least one image object included in the image of the image information may include, for example, a visually identifiable object such as a person (e.g., presenter) image, an image designated as a presentation material, and a text. The processor 120 may classify at least one image object included in the image by category, and perform analysis on each image object or perform a determination for executing a specified operation based on the classification. For example, the processor 120 may classify image objects recognized in the image according to image object attributes such as people, objects, images, texts, screens, and blackboards. The processor 120 may select classified image objects. The selection operation may be an operation for reducing the complexity of image analysis. For example, the processor 120 may select only image objects necessary for analysis based on the size and appearance frequency of the classified and specified image object. According to an embodiment, the processor 120 may perform image analysis on the first image 410 to select at least one image object.

According to various embodiments, the processor 120 may identify a target image object among at least one image object included in the first image 410. In order to generate a second image (e.g., a second image 420 of FIG. 4) based on the first image 410, the target image object may be an image object to be a target for generating the second image 420. For example, the processor 120 may generate a second image 420 corresponding to the target image object. According to an embodiment, the processor 120 may determine a target image object based on the appearance frequency and size of at least one image object included in the first image 410 selected through image analysis. According to an embodiment, the processor 120 may receive an input for selecting a target image object from the input module 150 and identify the target image object based on the input.

According to various embodiments, the processor 120 may identify a contour area of the target image. According to an embodiment, the processor 120 may identify pixels of the identified target image object and a peripheral area, and identify an inner area of a contour of the target image object. According to an embodiment, the processor 120 may identify a size, position, and/or shape of the inner area of the contour of the target image object.

According to an embodiment, the processor 120 may select an entire area of the first image 410 as the first area. According to an embodiment, the processor 120 may select an inner area of at least one image object included in the first image 410 as the first area. According to an embodiment, the processor 120 may select an inner area of the target image object as the first area. According to an embodiment, the processor 120 may select an inner area included in the contour of the target image object as the first area.

According to the invention, the processor 120 generates a second image (e.g., the second image 420 of FIG. 4). The second image 420 is an image that divides the first area into a plurality of areas (e.g., second area). The second image 420 includes a contour of the first area and at least one line segment dividing the inside of the contour of the first area. According to an embodiment, the second image 420 may include a grid-shaped image. For example, the grid shape included in the second image 420 may divide the first area into a plurality of second areas (e.g., an inner area of the grid). The second image 420 includes images such as symbols and characters capable of distinguishing, identifying, and/or indicating a plurality of second areas. According to an embodiment, the second image 420 may be an image corresponding to the first area. For example, the second image 420 may include a contour line forming a contour of a shape corresponding to the first area and straight lines and/or curves dividing the inside of the contour into a plurality of second areas.

According to various embodiments, the processor 120 may generate a second image 420 based on an area of the first area. According to an embodiment, the processor 120 may generate a second image 420 based on a relative area occupied by the first area with respect to the entire area of the first image 410. The second image 420 may include a grid-shaped image, and the processor 120 may configure the shape and/or number of grids based on an area of the first area. For example, the processor 120 may identify an area of the first area based on the number of pixels occupied by the first area, and configure the number of grids based on the identified area of the first area. According to an embodiment, the processor 120 may identify the number of grids according to the area of the first area based on conditions preconfigured and stored in the memory 130. According to an embodiment, the processor 120 may receive a user's input for selecting the number of grids using the input module 160 and configure the number of grids based on the received input. According to an embodiment, the processor 120 may generate a second image 420 based on the configured number of grids.

According to various embodiments, the processor 120 may generate a second image 420 based on the shape of the first area. According to an embodiment, the processor 120 may identify the shape of the first area. The shape of the first area may be a two-dimensional (2D) figure formed by the contour of the first area. Alternatively, the shape of the first area may be a three-dimensional (3D) figure formed by the contour of the first area. According to an embodiment, the processor 120 may identify the shape of the first area based on a basic figure shape (e.g., circle, ellipse, rectangle, rhombus, or trapezoid) previously stored in the memory 130. For example, the processor 120 may identify a figure shape most similar to the shape of the first area among pre-stored basic figure shapes. The processor 120 may generate a second image 420 based on the identified basic figure shape. For example, the processor 120 may combine grid images disposed inside the basic figure shape to generate a second image 420. According to an embodiment, the basic figure shape previously stored in the memory 130 may be a 3D figure (e.g., sphere, cone, cylinder, hexahedron, or tetrahedron). According to an embodiment, the processor 120 may generate a second image 420 including a grid-shaped image disposed inside a shape of the first area and/or a shape of a basic figure similar to the first area.

According to various embodiments, the processor 120 may generate a second image 420 based on the target image object. According to an embodiment, the processor 120 may identify the shape of the target image object in 2D and/or 3D. According to an embodiment, the processor 120 may identify the 3D shape of the target image object using the camera module 180. For example, the processor 120 may identify the 3D image shape of the target image object using distance information between each area of the target image object and the electronic device 101 using a depth camera included in the camera module 180. According to an embodiment, the processor 120 may estimate a 3D image shape of the target image object using image analysis to identify the shape of the target image object. According to an embodiment, the processor 120 may generate a 2D or 3D second image 420 based on the shape of the target image object. For example, the processor 120 may generate a grid image of a 3D shape including a contour of the 3D image shape of the target image object and line segments dividing the inside of the contour into a plurality of areas and then render the grid image of the 3D shape to a 2D flat image to generate a second image 420.

According to various embodiments, the processor 120 may generate a second image 420 based on the 3D shape of the target image object. According to an embodiment, the processor 120 may generate 3D modeling information corresponding to the target image object. According to an embodiment, the processor 120 may generate modeling information corresponding to the target image object based on the shape of the target image object and/or 3D shape information acquired using the camera module 180. According to an embodiment, the processor 120 may generate a grid image having a 3D shape including a contour of the target image object and line segments dividing an inner area of the target image object into a plurality of second areas based on the modeling information. According to an embodiment, the processor 120 may render the 3D shape grid image into a 2D flat image to generate a second image 420.

According to various embodiments, the processor 120 may change the second image 420 based on the change in the first area. For example, the processor 120 may change the second image 420 based on a change in position and/or direction of the first area. According to an embodiment, the processor 120 may change the second image based on a position and/or direction of the target image object. The target image object may be included in the first area, and the position and/or direction of the first area may be the same as the position and/or direction of the target image object. According to an embodiment, the processor 120 may identify the target image object and track the position, direction, shape and/or size of the target image object. According to an embodiment, in the case that the position of the first area is changed, the processor 120 may generate a second image 420 at the changed position. According to an embodiment, in the case that the direction of the target image object is changed, the processor 120 may generate a second image 420 corresponding to the changed direction. For example, the processor 120 may continuously and/or periodically identify the 3D shape of the target image object and identify direction information (e.g., direction angle) of the target image object. According to an embodiment, in the case that the direction of the target image object is changed, the processor 120 may generate a grid image based on the changed direction. According to an embodiment, the processor 120 may generate a second image 420 including the changed grid image.

According to the invention, the processor 120 generates a third image (e.g., a third image 430 of FIG. 4). The third image 430 is a synthesized image of the first image 410 and the second image 420. According to an embodiment, the second image 420 may include a plurality of line segments, and the processor 120 may overlay the second image 420 on at least a partial area on the first image 410 to generate a third image 430. According to an embodiment, the third image 430 may be an image in which the second image 420 is overlaid on the first image 410.

According to various embodiments, the processor 120 may share the second image 420 and/or the third image 430. According to an embodiment, the processor 120 may be sharing the first image 410 and share the second image 420 generated together with the first image 410. Alternatively, the processor 120 may share the third image 430 in which the first image 410 and the second image 420 are synthesized. According to an embodiment, the processor 120 may display the second image 420 and/or the third image 430 on the display module 160. According to the invention the processor 120 controls the communication module 190 to transmit the third image 430 to an external electronic device (e.g., the external electronic device 230 of FIG. 2).

According to various embodiments, the processor 120 may select a partial area (e.g., third area) of the shared image. The shared image may include a first image 410, a second image 420 and/or a third image 430. The third area may be at least one area of a plurality of areas (e.g., second area) in the first image 410 divided by the second image 420, that is, at least a portion of the plurality of second areas. According to an embodiment, the second image 420 may be a grid-shaped image, and an area (e.g., first area) in which the second image 420 is formed among the first image 410 may be divided into the plurality of second areas by a grid image. According to an embodiment, the third area may include an area formed by at least one grid included in the grid image. According to an embodiment, the processor 120 may receive an input for selecting the third area using the input module 160 and identify the third area based on the input.

According to various embodiments, the processor 120 may process a shared image corresponding to the selected third area. According to an embodiment, the processor 120 may process at least a portion of the first image 410 corresponding to the third area. Image processing may include, for example, enlarging an image, changing an image, or converting an image. For example, the processor 120 may enlarge at least a portion of the first image 410 corresponding to the third area. According to an embodiment, the processor 120 may process (e.g., blind processing) at least a portion of the first image 410 corresponding to the third area to be invisible. According to an embodiment, the processor 120 may process (e.g., blind processing) an area other than the third area in the first image 410 to be invisible.

According to an embodiment, the processor 120 may generate a fourth image corresponding to the third area. According to an embodiment, the fourth image may be an image generated corresponding to the third area. For example, the fourth image may include a new grid image. According to an embodiment, the processor 120 may generate a grid image dividing the third area into a plurality of areas corresponding to the third area. According to an embodiment, the processor 120 may synthesize the first image 410 processed corresponding to the third area to generate a fourth image. For example, the fourth image may include an image acquired by blinding or enlarging at least a portion of the first image 410. According to an embodiment, the processor 120 may display the generated fourth image using the display module 160. According to an embodiment, the processor 120 may transmit the generated fourth image to a server (e.g., the server device 220 of FIG. 2) and/or an external electronic device (e.g., the external electronic device 230 of FIG. 2) using the communication module 190.

FIG. 4 illustrates a first image and a second image according to an embodiment of the disclosure.

Referring to FIG. 4, the third image 430 may be an image generated by synthesizing the first image 410 and the second image 420 with each other.

The first image 410 may be data shared by the electronic device (e.g., the electronic device 101 of FIG. 3) in order to provide a video conference service. For example, the first image 410 may be image data such as a video image or a presentation material. According to an embodiment, the first image 410 may be an image captured by a camera module (e.g., the camera module 180 of FIG. 3) of the electronic device 101. According to an embodiment, the first image 410 may be multimedia data stored in the memory (e.g., the memory 130 of FIG. 3) and executed by the processor 120. For example, the first image 410 may be a moving image. According to an embodiment, the processor 120 may display the first image 410 using a display module (e.g., the display module 160 of FIG. 3). The first image 410 may be, for example, all or part of image data displayed by the display module 160. According to an embodiment, the processor 120 may control the communication module (e.g., the communication module 190 of FIG. 3) to transmit the first image 410 to the server device (e.g., the server device 220 of FIG. 2) and/or the external electronic device 230.

According to various embodiments, the processor 120 may select at least a partial area (e.g., first area) of the first image 410. According to an embodiment, the first image 410 may include at least one image object in at least a partial area. For example, the selected area may be an area in which at least one image object included in the first image 410 exists.

The second image 420 may be an image that divides the first area into a plurality of areas (e.g., second area). For example, the second image 420 may include a contour of the first area and at least one line segment dividing the inside of the contour of the first area. According to an embodiment, the second image 420 may include a grid-shaped image. For example, the grid shape included in the second image 420 may divide the first area into a plurality of second areas (e.g., an inner area of the grid). The second image 420 may include images such as symbols and characters capable of distinguishing a plurality of second areas. According to an embodiment, the second image 420 may be an image corresponding to the first area. For example, the second image 420 may include a contour line forming a contour of a shape corresponding to the first area and straight lines and/or curves dividing the inside of the contour into a plurality of second areas. According to various embodiments, the processor 120 may generate a second image 420.

The third image 430 may be a synthesized image of the first image 410 and the second image 420. According to an embodiment, the second image 420 may include a plurality of line segments, and the processor 120 may overlay the second image 420 in at least a partial area on the first image 410 to generate a third image 430. According to an embodiment, the third image 430 may be an image in which the second image 420 is overlaid on the first image 410. According to various embodiments, the processor 120 may generate a third image 430.

A participant image 440 may be an image representing a user participating in a video conference service. According to an embodiment, the user may include at least one host and at least one guest hosting a conference. For example, the host may be a user of the electronic device 101, and the guest may be a user of an external electronic device (e.g., the external electronic device 230 of FIG. 2). The participant image may be a captured image of each user and/or a substitute image representing each user. According to an embodiment, the participant image 440 may include a video image 441 of a user (host) and video images of one or more guests.

The display module 160 of the electronic device 101 may display the third image 430 on the screen 400. Alternatively, the display module 160 may output the second image 420 on a layer displaying the first image 410 to output the same image as the third image 430 on the screen 400. According to an embodiment, the screen 400 on which the electronic device 101 provides a video conference service may include a third image 430 (or the first image 410 and the second image 420) and a participant image 440.

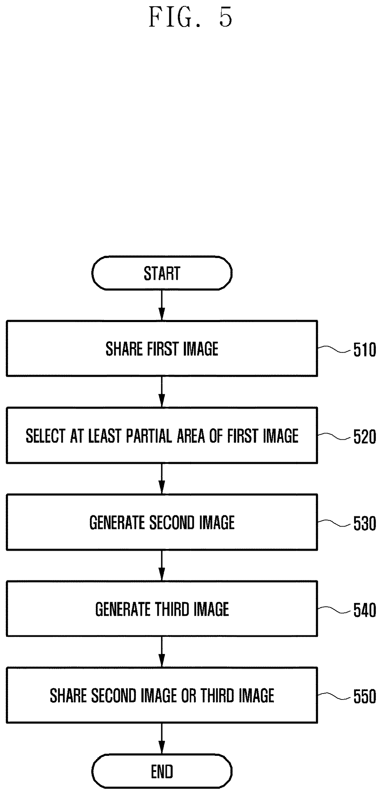

FIG. 5 is a flowchart illustrating operation for providing a video conference by an electronic device according to an embodiment of the disclousre.

Referring to FIG. 5, operation for the electronic device (e.g., the electronic device 101 of FIG. 3) to provide a video conference may be described by each operation of the processor (e.g., the processor 120 of FIG. 3) of the electronic device 101. In each operation of FIG. 5, the sequence and/or part of the operation may be changed.

With reference to operation 510, the processor 120 may share a first image (e.g., the first image 410 of FIG. 4). The first image 410 may be data shared by the electronic device 101 in order to provide a video conference service. For example, the first image 410 may be image data such as a video image or a presentation material. According to an embodiment, the first image 410 may be an image captured by a camera module (e.g., the camera module 180 of FIG. 3) of the electronic device 101. According to an embodiment, the first image 410 may be multimedia data stored in the memory (e.g., the memory 130 of FIG. 3) and executed by the processor 120. For example, the first image 410 may be a moving image. According to an embodiment, the processor 120 may display the first image 410 using a display module (e.g., the display module 160 of FIG. 3). The first image 410 may be, for example, all or part of image data displayed by the display module 160. According to an embodiment, the processor 120 may control a communication module (e.g., the communication module 190 of FIG. 3) to transmit the first image 410 to the server device (e.g., the server device 220 of FIG. 2) and/or the external electronic device 230.

With reference to operation 520, the processor 120 may select at least a partial area (e.g., first area) of the first image 410. According to an embodiment, the first image 410 may include at least one image object in at least a partial area. For example, the selected area may be an area in which at least one image object included in the first image 410 exists. According to various embodiments, the processor 120 may perform image analysis on the first image 410. According to an embodiment, the processor 120 may use at least one algorithm stored in the memory 130 in order to perform image analysis. According to an embodiment, the processor 120 may analyze an image included in image information to identify at least one image object included in the image. At least one image object included in the image of the image information may include, for example, a visually identifiable object such as a person (e.g., presenter) image, an image designated as a presentation material, and a text. The processor 120 may classify at least one image object included in the image by category, and perform analysis on each image object or perform a determination for executing a specified operation based on the classification. For example, the processor 120 may classify image objects recognized in the image according to image object attributes such as people, objects, images, texts, screens, and blackboards. The processor 120 may select classified image objects. The selection operation may be an operation for reducing the complexity of image analysis. For example, the processor 120 may select only image objects necessary for analysis based on the size and appearance frequency of the classified and specified image object. According to an embodiment, the processor 120 may perform image analysis on the first image 410 to select at least one image object.

According to various embodiments, the processor 120 may identify a target image object among at least one image object included in the first image 410. In order to generate a second image (e.g., the second image 420 of FIG. 4) based on the first image 410, the target image object may be an image object to be a target for generating the second image 420.

According to an embodiment, the processor 120 may select an entire area of the first image 410 as the first area. According to an embodiment, the processor 120 may select an inner area of at least one image object included in the first image 410 as the first area. According to an embodiment, the processor 120 may select an inner area of the target image object as the first area. According to an embodiment, the processor 120 may select an inner area included in the contour of the target image object as the first area.

With reference to operation 530, the processor 120 may generate a second image (e.g., the second image 420 of FIG. 4). The second image 420 may be an image that divides the first area into a plurality of areas (e.g., second area). For example, the second image 420 may include a contour of the first area and at least one line segment dividing the inside of the contour of the first area. According to an embodiment, the second image 420 may include a grid-shaped image. For example, the grid shape included in the second image 420 may divide the first area into a plurality of second areas (e.g., an inner area of the grid). The second image 420 may include images such as symbols and characters capable of distinguishing a plurality of second areas. According to an embodiment, the second image 420 may be an image corresponding to the first area. For example, the second image 420 may include a contour line forming a contour of a shape corresponding to the first area and straight lines and/or curves dividing the inside of the contour into a plurality of second areas.

According to various embodiments, the processor 120 may generate a second image 420 based on an area of the first area. According to an embodiment, the processor 120 may generate a second image 420 based on a relative area occupied by the first area with respect to the entire area of the first image 410. The second image 420 may include a grid-shaped image, and the processor 120 may configure a shape and/or number of grids based on an area of the first area. For example, the processor 120 may identify an area of the first area based on the number of pixels occupied by the first area, and configure the number of grids based on the identified area of the first area. According to an embodiment, the processor 120 may identify the number of grids according to an area of the first area based on conditions preconfigured and stored in the memory 130. According to an embodiment, the processor 120 may receive a user's input for selecting the number of grids using the input module 160 and configure the number of grids based on the received input. According to an embodiment, the processor 120 may generate a second image 420 based on the configured number of grids.

According to various embodiments, the processor 120 may generate a second image 420 based on the shape of the first area. According to an embodiment, the processor 120 may identify the shape of the first area. The shape of the first area may be a 2D figure formed by a contour of the first area. Alternatively, the shape of the first area may be a 3D figure formed by a contour of the first area. According to an embodiment, the processor 120 may identify a shape of the first area based on a shape (e.g., circle, ellipse, rectangle, rhombus, or trapezoid) of a basic figure previously stored in the memory 130. For example, the processor 120 may identify a figure shape most similar to the shape of the first area among pre-stored basic figure shapes. The processor 120 may generate a second image 420 based on the identified basic figure shape. For example, the processor 120 may combine grid images disposed inside the basic figure shape to generate a second image 420. According to an embodiment, the basic figure shape previously stored in the memory 130 may be a 3D figure (e.g., sphere, cone, cylinder, hexahedron, or tetrahedron). According to an embodiment, the processor 120 may generate a second image 420 including a grid-shaped image disposed inside a shape of the first area and/or a shape of a basic figure similar to the first area.

According to various embodiments, the processor 120 may generate a second image 420 based on the target image object. For example, the processor 120 may generate a second image 420 based on the shape, area, and/or position of the target image object.

With reference to operation 540, the processor 120 may generate a third image (e.g., a third image 430 of FIG. 4). The third image 430 may be, for example, a synthesized image of the first image 410 and the second image 420. According to an embodiment, the second image 420 may include a plurality of line segments, and the processor 120 may overlay the second image 420 on at least a partial area on the first image 410 to generate a third image 430. According to an embodiment, the third image 430 may be an image in which the second image 420 is overlaid on the first image 410.

With reference to operation 550, the processor 120 may share the second image 420 and/or the third image 430. According to an embodiment, the processor 120 may be sharing the first image 410 and share the second image 420 generated together with the first image 410. Alternatively, the processor 120 may share the third image 430 in which the first image 410 and the second image 420 are synthesized. According to an embodiment, the processor 120 may display the second image 420 and/or the third image 430 on the display module 160. According to an embodiment, the processor 120 may control the communication module 190 to transmit the second image 420 and/or the third image 430 to the server (e.g., the server device 230 of FIG. 2) and/or the external electronic device (e.g., the external electronic device 230 of FIG. 2).

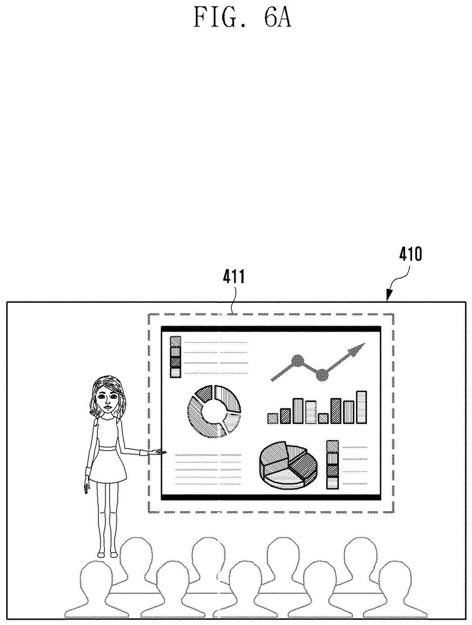

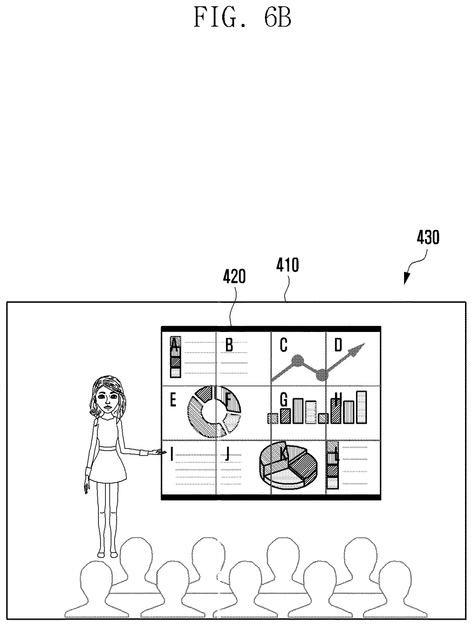

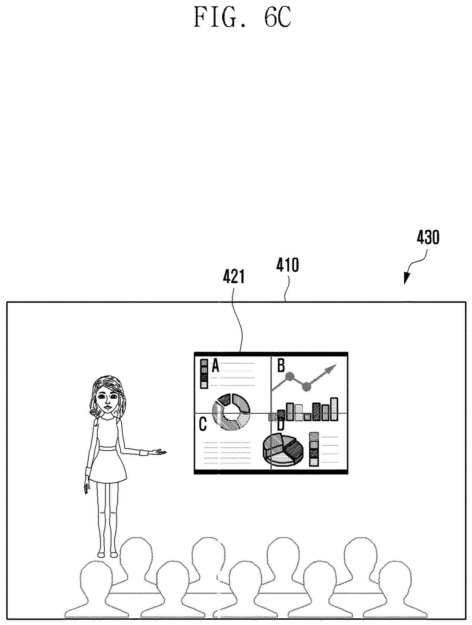

FIGS. 6A, 6B, and 6C illustrate generating a second image corresponding to a partial area of a first image according to various embodiments of the disclosure.

Referring to FIGS. 6A, 6B, and/or 6C, the electronic device (e.g., the electronic device 101 of FIG. 3) may generate a second image 420 and a third image 430 based on the first image 410.

Referring to FIG. 6A, the first image 410 may be data shared by the electronic device (e.g., the electronic device 101 of FIG. 3) in order to provide a video conference service. For example, the first image 410 may be image data such as a video image or presentation material. According to an embodiment, the first image 410 may be an image captured by a camera module (e.g., the camera module 180 of FIG. 3) of the electronic device 101. According to an embodiment, the first image 410 may be multimedia data stored in the memory (e.g., the memory 130 of FIG. 3) and executed by the processor 120. For example, the first image 410 may be a moving image. According to an embodiment, the processor (e.g., the processor 120 of FIG. 3) of the electronic device 101 may display the first image 410 using a display module (e.g., the display module 160 of FIG. 3). The first image 410 may be, for example, all or part of image data displayed by the display module 160. According to an embodiment, the processor 120 may control a communication module (e.g., the communication module 190 of FIG. 3) to transmit the first image 410 to the server device (e.g., the server device 220 of FIG. 2) and/or the external electronic device 230. The processor 120 may select at least a partial area (e.g., a first area 411) of the first image 410. According to an embodiment, the first image 410 may include at least one image object in at least a partial area. For example, the selected area (e.g., the first area 411) may be an area in which at least one image object included in the first image 410 exists.

Referring to FIG. 6B, the processor 120 of the electronic device 101 may generate a second image 420. The second image 420 may be an image that divides the first area into a plurality of areas (e.g., second area). For example, the second image 420 may include a contour of the first area 411 and at least one line segment dividing the inside of the contour of the first area 411. According to an embodiment, the second image 420 may include a grid-shaped image. For example, a grid shape included in the second image 420 may divide the first area 411 into a plurality of second areas (e.g., an inner area of the grid). The second image 420 may include images such as symbols and characters capable of distinguishing a plurality of second areas. According to an embodiment, the second image 420 may be an image corresponding to the first area 411. For example, the second image 420 may include a contour line forming a contour of a shape corresponding to the first area 411 and straight lines and/or curves dividing the inside of the contour into a plurality of second areas.

Referring to FIG. 6B, the processor 120 of the electronic device 101 may generate a third image (e.g., the third image 430 of FIG. 4). The third image 430 may be, for example, a synthesized image of the first image 410 and the second image 420. According to an embodiment, the second image 420 may include a plurality of line segments, and the processor 120 may overlay the second image 420 on at least a partial area on the first image 410 to generate a third image 430. According to an embodiment, the third image 430 may be an image in which the second image 420 is overlaid on the first image 410.

Referring to FIGS. 6B and/or 6C, the processor 120 may generate second images 420 and 421 based on the shape of the first area 411. For example, in the case that the first area 411 has a rectangular shape, the processor 120 may generate second images 420 and 421 including a contour corresponding to the rectangular shape and a straight line dividing the inner area. According to an embodiment, the processor 120 may identify the shape of the first area 411. The shape of the first area 411 may be a 2D figure formed by a contour of the first area 411. Alternatively, the shape of the first area 411 may be a 3D figure formed by a contour of the first area 411. According to an embodiment, the processor 120 may identify the shape of the first area 411 based on a basic figure shape (e.g., circle, ellipse, rectangle, rhombus, or trapezoid) previously stored in the memory 130. For example, the processor 120 may identify a figure shape most similar to the shape of the first area 411 among pre-stored basic figure shapes. The processor 120 may generate second images 420 and 421 based on the identified basic figure shape. For example, the processor 120 may combine grid images disposed inside the basic figure shape to generate second images 420 and 421. According to an embodiment, the basic figure shape previously stored in the memory 130 may be a 3D figure (e.g., sphere, cone, cylinder, hexahedron, or tetrahedron). According to an embodiment, the processor 120 may generate second images 420 and 421 including a grid-shaped image disposed inside the shape of the first area 411 and/or the shape of a basic figure similar to the first area 411.

Referring to FIGS. 6B and 6C, the processor 120 may generate second images 420 and 421 based on an area of the first area 411. According to an embodiment, the processor 120 may generate second images 420 and 421 based on a relative area occupied by the first area 411 with respect to the entire area of the first image 410. The second images 420 and 421 may include grid-shaped images, and the processor 120 may configure the shape and/or number of grids based on an area of the first area 411. For example, the processor 120 may identify an area of the first area 411 based on the number of pixels occupied by the first area 411 and configure the number of the grid based on the identified area of the first area 411. According to an embodiment, the processor 120 may identify the number of grids according to an area of the first area 411 based on conditions preconfigured and stored in the memory 130. According to an embodiment, the processor 120 may receive a user's input for selecting the number of grids using the input module 160 and configure the number of grids based on the received input. According to an embodiment, the processor 120 may generate second images 420 and 421 based on the configured number of grids. With reference to FIGS. 6B and/or 6C, the first area of FIG. 6C may be narrower than the first area of FIG. 6B. The processor 120 may generate a second image based on an area of the first area. Accordingly, the second image 420 of FIG. 6B may be generated to form over a larger area than that of the second image 421 of FIG. 6C and be generated to include a larger number of grids.

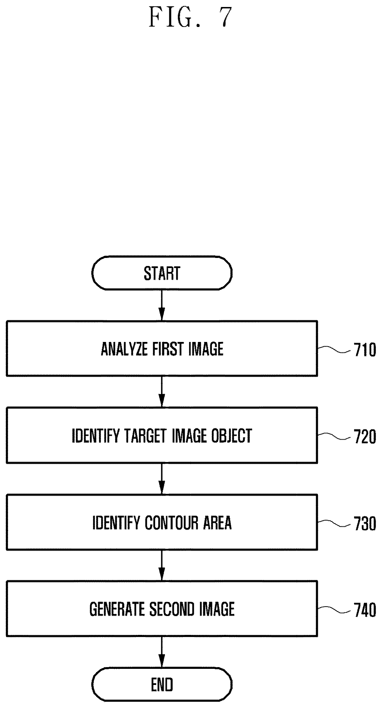

FIG. 7 is a flowchart illustrating operation of generating a second image by an electronic device according to an embodiment of the disclosure.

Referring to FIG. 7, operation for the electronic device (e.g., the electronic device 101 of FIG. 3) to generate a second image (e.g., the second image 420 of FIG. 4) may be described as each operation of the processor (e.g., the processor 120 of FIG. 3) of the electronic device 101. In each operation of FIG. 7, the order and/or part of the operation may be changed.

With reference to operation 710, the processor 120 may analyze the first image (e.g., the first image 410 of FIG. 4). According to various embodiments, the processor 120 may select at least a partial area (e.g., first area) of the first image 410. According to an embodiment, the first image 410 may include at least one image object in at least a partial area. For example, the selected area may be an area in which at least one image object included in the first image 410 exists. According to various embodiments, the processor 120 may perform image analysis on the first image 410. According to an embodiment, in order to perform image analysis, the processor 120 may use at least one algorithm stored in the memory 130. According to an embodiment, the processor 120 may analyze an image included in image information to identify at least one image object included in the image. At least one image object included in the image of the image information may include, for example, a visually identifiable object such as a person (e.g., presenter) image, an image designated as a presentation material, and a text. The processor 120 may classify at least one image object included in the image by category and perform analysis on each image object or perform a determination for executing a specified operation based on the classification. For example, the processor 120 may classify image objects recognized in the image according to image object attributes such as people, objects, images, texts, screens, and blackboards. The processor 120 may select classified image objects. The selection operation may be an operation for reducing the complexity of image analysis. For example, the processor 120 may select only image objects necessary for analysis based on the size and appearance frequency of the classified and specified image object. According to an embodiment, the processor 120 may perform image analysis on the first image 410 to select at least one image object.

With reference to operation 720, the processor 120 may identify a target image object among at least one image object included in the first image 410. In order to generate a second image (e.g., the second image 420 of FIG. 4) based on the first image 410, the target image object may be an image object to be a target for generating the second image 420. For example, the processor 120 may generate the second image 420 corresponding to the target image object. According to an embodiment, the processor 120 may determine a target image object based on the appearance frequency and size of at least one image object included in the first image 410 selected through image analysis. According to an embodiment, the processor 120 may receive an input for selecting a target image object from an input module (e.g., the input module 150 of FIG. 3) and identify the target image object based on the input.

With reference to operation 730, the processor 120 may identify a contour area of the target image. According to an embodiment, the processor 120 may identify pixels of the identified target image object and a peripheral area, and identify an inner area of the contour of the target image object. According to an embodiment, the processor 120 may identify a size, position, and/or shape of an inner area of the contour of the target image object. According to an embodiment, the processor 120 may configure the contour area as the first area. According to an embodiment, the processor 120 may select the entire area of the first image 410 as the first area. According to an embodiment, the processor 120 may select an inner area of at least one image object included in the first image 410 as the first area. According to an embodiment, the processor 120 may select an inner area of the target image object as the first area. According to an embodiment, the processor 120 may select an inner area included in the contour of the target image object as the first area.

With reference to operation 740, the processor 120 may generate a second image (e.g., the second image 420 of FIG. 4). According to various embodiments, the processor 120 may generate a second image 420 based on an area of the first area (e.g., contour area). According to an embodiment, the processor 120 may generate a second image 420 based on a relative area occupied by the first area with respect to the entire area of the first image 410. The second image 420 may include a grid-shaped image, and the processor 120 may configure a shape and/or number of grids based on an area of the first area. For example, the processor 120 may identify an area of the first area based on the number of pixels occupied by the first area and configure the number of grids based on the identified area of the first area. According to an embodiment, the processor 120 may identify the number of grids according to an area of the first area based on conditions previously configured and stored in the memory (e.g., the memory 130 of FIG. 3). According to an embodiment, the processor 120 may receive a user's input for selecting the number of grids using an input module (e.g., the input module 160 of FIG. 3) and configure the number of grids based on the received input. According to an embodiment, the processor 120 may generate a second image 420 based on the configured number of grids.

According to various embodiments, the processor 120 may generate a second image 420 based on the shape of the first area (e.g., contour area). According to an embodiment, the processor 120 may identify the shape of the first area. The shape of the first area may be a 2D figure formed by a contour of the first area. Alternatively, the shape of the first area may be a 3D figure formed by a contour of the first area. According to an embodiment, the processor 120 may identify the shape of the first area based on a shape (e.g., circle, ellipse, rectangle, rhombus, or trapezoid) of a basic figure previously stored in the memory 130. For example, the processor 120 may identify a figure shape most similar to the shape of the first area among pre-stored basic figure shapes. The processor 120 may generate a second image 420 based on the identified basic figure shape. For example, the processor 120 may combine grid images disposed inside the basic figure shape to generate a second image 420. According to an embodiment, the basic figure shape previously stored in the memory 130 may be a 3D figure (e.g., sphere, cone, cylinder, hexahedron, or tetrahedron). According to an embodiment, the processor 120 may generate a second image 420 including a grid-shaped image disposed inside a shape of the first area and/or a shape of a basic figure similar to the first area.

According to various embodiments, the processor 120 may generate a second image 420 based on the target image object. According to an embodiment, the processor 120 may identify a shape of the target image object in 2D and/or 3D. According to an embodiment, the processor 120 may identify a 3D shape of the target image object using the camera module 180. For example, the processor 120 may identify the 3D image shape of the target image object using distance information between each area of the target image object and the electronic device 101 using a depth camera included in the camera module 180. According to an embodiment, the processor 120 may estimate the 3D image shape of the target image object using image analysis to identify the shape of the target image object. According to an embodiment, the processor 120 may generate a 2D or 3D second image 420 based on the shape of the target image object. For example, the processor 120 may generate a grid image of a 3D shape including a contour of the 3D image shape of the target image object and line segments dividing the inside of the contour into a plurality of areas and then generate a second image 420 in which the grid image of the 3D shape is rendered into a 2D flat image.

According to various embodiments, the processor 120 may generate a second image 420 based on a 3D shape of the target image object. According to an embodiment, the processor 120 may generate 3D modeling information corresponding to the target image object. According to an embodiment, the processor 120 may generate modeling information corresponding to the target image object based on the shape of the target image object and/or 3D shape information acquired using the camera module 180. According to an embodiment, the processor 120 may generate a grid image having a 3D shape including a contour of the target image object and line segments dividing an inner area of the target image object into a plurality of second areas based on the modeling information. According to an embodiment, the processor 120 may render a 3D shape grid image into a 2D flat image to generate a second image 420.

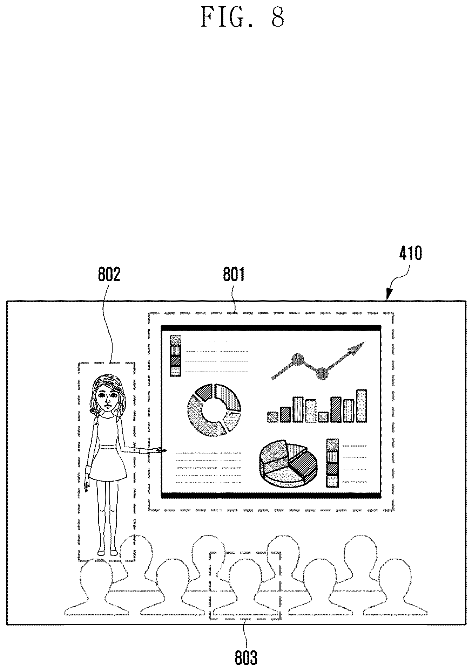

FIG. 8 illustrates an example in which an electronic device detects a plurality of image objects from a first image according to an embodiments of the disclosure.

Referring to FIG. 8, a first image 410 may include at least one image object (e.g., a first image object 801, a second image object 802, and a third image object 803) in at least a partial area. According to various embodiments, the processor (e.g., the processor 120 of FIG. 3) of the electronic device (e.g., the electronic device 101 of FIG. 3) may perform image analysis on the first image 410. According to an embodiment, in order to perform image analysis, the processor 120 may use at least one algorithm stored in the memory (e.g., the memory 130 of FIG. 3). According to an embodiment, the processor 120 may analyze an image included in the image information and identify at least one image object (e.g., the first image object 801, the second image object 802, and the third image object 803) included in the image. At least one image object (e.g., the first image object 801, the second image object 802, and the third image object 803) included in the image of the image information may include, for example, a visually identifiable object such as a person (e.g., a presenter) image, an image designated as a presentation material, and a text. The processor 120 may classify at least one image object (e.g., the first image object 801, the second image object 802, and the third image object 803) included in the image by category, perform analysis of each image object (e.g., the first image object 801, the second image object 802, and the third image object 803) based on the corresponding classification, or perform a determination for executing a specified operation. For example, the processor 120 may classify image objects (e.g., the first image object 801, the second image object 802, and the third image object 803) recognized in an image into image object attributes such as people, objects, images, texts, screens, and blackboards. The processor 120 may select the classified image objects (e.g., the first image object 801, the second image object 802, and the third image object 803). The selection operation may be an operation for reducing the complexity of image analysis. For example, the processor 120 may select only image objects required for analysis based on the size and appearance frequency of classified and designated image objects (e.g., the first image object 801, the second image object 802, and the third image object 803). According to an embodiment, the processor 120 may perform image analysis on the first image 410 to select at least one image object (e.g., the first image object 801, the second image object 802, and the third image object 803).

According to various embodiments, the processor 120 may identify a target image object (e.g., the first image object 801) among at least one image object (e.g., the first image object 801, the second image object 802, and the third image object 803) included in the first image 410. In order to generate a second image (e.g., the second image 420 of FIG. 4) based on the first image 410, the target image object (e.g., the first image object 801) may be an image object to be a target that generates the second image 420. For example, the processor 120 may generate a second image 420 corresponding to the target image object (e.g., the first image object 801). According to an embodiment, the processor 120 may determine a target image object based on the appearance frequency and size of at least one image object (e.g., the first image object 801, the second image object 802, and the third image object 803) included in the first image 410 selected through image analysis. According to an embodiment, the processor 120 may receive an input for selecting a target image object (e.g., the first image object 801) among at least one object (e.g., the first image object 801, the second image object 802, and the third image object 803) included in the first image 410 from an input module (e.g., the input module 150 of FIG. 3) and identify the target image object based on the input.

According to various embodiments, the processor 120 may identify a contour area of the target image object (e.g., the first image object 801). According to an embodiment, the processor 120 may identify pixels of the identified target image object (e.g., the first image object 801) and a peripheral area, and identify an inner area of a contour of the target image object (e.g., the first image object 801). According to an embodiment, the processor 120 may identify a size, position, and/or shape of the inner area of the contour of the target image object (e.g., the first image object 801).

According to an embodiment, the processor 120 may select an entire area of the first image 410 as the first area. According to an embodiment, the processor 120 may select an inner area of at least one image object (e.g., the first image object 801, the second image object 802, and the third image object 803) included in the first image 410 as the first area. According to an embodiment, the processor 120 may select an inner area of the target image object (e.g., the first image object 801) as the first area. According to an embodiment, the processor 120 may select an inner area included in the contour of the target image object as the first area.

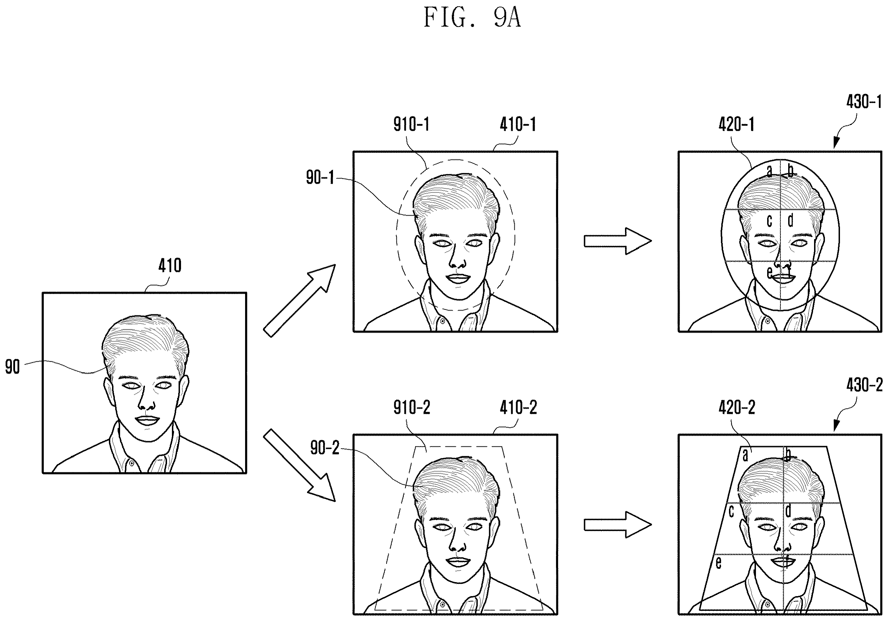

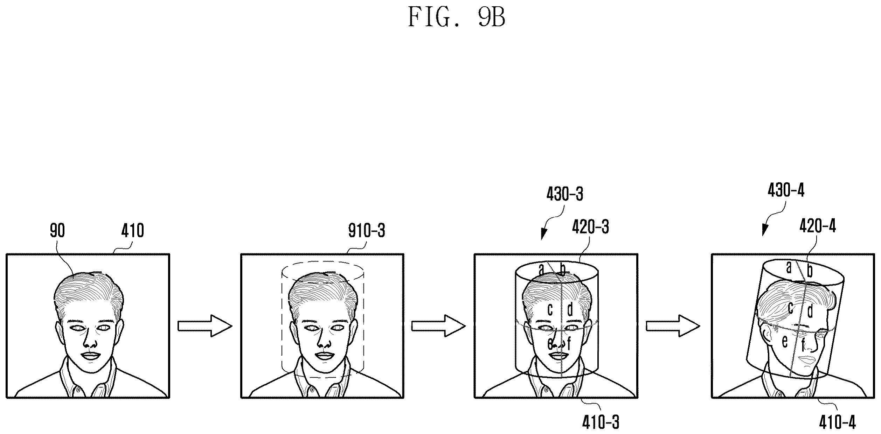

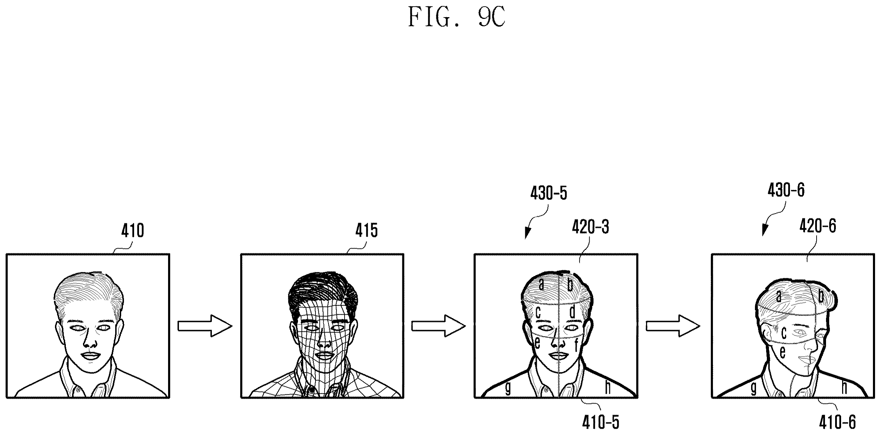

FIGS. 9A, 9B, and 9C illustrate an example in which an electronic device generates a second image based on a target image object according to various embodiments of the disclosure.

Referring to FIGS. 9A, 9B, and/or 9C, the electronic device (e.g., the electronic device 101 of FIG. 3) may generate second images 420-1, 420-2, 420-3, and 420-4 based on the first images 410, 410-1, 410-2, 410-3, and 410-4. According to an embodiment, the processor 120 may configure a first area (e.g., 90-1, 90-2) in at least a partial area of the first image and configure a target image object 90 to the first areas 90-1 and 90-2.

Referring to FIG. 9A, the target image object 90 may be a person-shaped image object. With reference to FIG. 9A, the processor 120 may select the first areas 90-1 and 90-2 and shapes 910-1 and 910-2 of the first area based on a shape of the target image object 90. For example, in the case that the target image object 90 is an image limited to a face area, the processor 120 may configure the first area 90-1 corresponding to the face, or in the case that the target image object 90 is an overall shape of the person, the processor 120 may select the first area 90-2 corresponding to the overall shape of the person. According to various embodiments, the processor 120 may generate second images 420-1 and 420-2 based on the shapes 910-1 and 910-2 of the first area. According to an embodiment, the processor 120 may identify the shapes 910-1 and 910-2 of the first area. The shapes 910-1 and 910-2 of the first areas may be shapes corresponding to 2D figures formed by contours of the first areas 90-1 and 90-2. Alternatively, the shapes 910-1 and 910-2 of the first areas may be 3D figures formed by contours of the first areas 90-1 and 90-2. According to an embodiment, the processor 120 may identify shapes 910-1 and 910-2 of the first area based on a basic figure shape (e.g., circle, ellipse, rectangle, rhombus, or trapezoid) previously stored in the memory (e.g., the memory 130 of FIG. 3). For example, the processor 120 may identify a figure shape most similar to the first areas 90-1 and 90-2 among pre-stored basic figure shapes. With reference to FIG. 9A, in the case that the face area is selected as the first area 90-1, the processor 120 may configure a circle, which is the most similar figure as the shape 910-1 of the first area, and in the case that the entire area of the person is selected as the first area 90-2, the processor 120 may configure a trapezoid, which is the most similar figure as the shape 910-2 of the first area. According to various embodiments, the processor 120 may generate second images 420-1 and 420-2 based on the identified basic figure shape. For example, the processor 120 may combine grid images disposed inside the basic figure shape to generate second images 420-1 and 420-2.

Referring to FIG. 9B, the processor 120 may identify a shape 910-3 of the first area based on the basic figure shape (e.g., circle, ellipse, rectangle, rhombus, or trapezoid) previously stored in the memory 130. According to an embodiment, the basic figure shape previously stored in the memory 130 may be a 3D figure (e.g., sphere, cone, cylinder, hexahedron, or tetrahedron). With reference to FIG. 9B, the shape 910-3 of the first area may be a cylindrical shape. According to an embodiment, the processor 120 may generate a second image 420-3 including a grid-shaped image disposed inside the shape of a basic figure similar to the target image object 90 and/or the shape 910-3 of the first area. For example, the processor 120 may identify a figure shape most similar to the target image object 90 among pre-stored basic figure shapes. The processor 120 may generate a second image 420-3 based on the identified basic figure shape. For example, the processor 120 may combine grid images disposed inside the basic figure shape to generate the second image 420-3. According to various embodiments, the processor 120 may generate a second image 420-3 based on the 3D shape of the target image object 90. According to an embodiment, the processor 120 may identify the shape of the target image object 90 in 2D and/or 3D. According to an embodiment, the processor 120 may identify a 3D shape of the target image object 90 using the camera module 180. For example, the processor 120 may identify a 3D image shape of the target image object 90 using distance information between each area of the target image object 90 and the electronic device 101 using a depth camera included in the camera module 180. According to an embodiment, the processor 120 may estimate a 3D image shape of the target image object 90 using image analysis to identify the shape of the target image object 90. According to an embodiment, the processor 120 may generate a 2D or 3D second image 420-3 based on the shape of the target image object 90. For example, the processor 120 may generate a grid image of a 3D shape including a contour of the 3D image shape of the target image object 90 and line segments dividing the inside of the contour into a plurality of areas and then render the grid image of the 3D shape into a 2D flat image to generate a second image 420-3.

Referring to FIG. 9C, the processor 120 may generate a second image 420-5 based on the 3D shape of the target image object. According to an embodiment, the processor 120 may generate 3D modeling information 415 corresponding to the target image object based on the first image 410. According to an embodiment, the processor 120 may generate modeling information 415 corresponding to the target image object based on the shape of the target image object and/or 3D shape information acquired using the camera module 180. According to an embodiment, the processor 120 may generate a grid image of a 3D shape including a contour of the target image object and line segments dividing the inner area of the target image object into a plurality of second areas based on the modeling information 415. According to an embodiment, the processor 120 may render the grid image of a 3D shape into a 2D flat image to generate a second image 420-5.

Referring to FIGS. 9B and 9C, the processor 120 may change the second images 420-3 and 420-5 based on the change in the first area. For example, the processor 120 may change the second images 420-3 and 420-5 based on changes in a position and/or direction of the target image object (and/or first area). According to an embodiment, the processor 120 may change the second image based on a position and/or direction of the target image object. The target image object may be included in the first area, and the position and/or direction of the first area may be the same as a position and/or direction of the target image object. According to an embodiment, the processor 120 may identify the target image object and track the position, direction, shape and/or size of the target image object. According to an embodiment, in the case that a position of the first area is changed, the processor 120 may generate the changed second images 420-4 and 420-6 at the changed position. According to an embodiment, in the case that the direction of the target image object is changed, the processor 120 may generate second images 420-4 and 420-6 changed corresponding to the changed direction. For example, the processor 120 may continuously and/or periodically identify the 3D shape of the target image object and identify direction information (e.g., direction angle) of the target image object. According to an embodiment, in the case that the direction of the target image object is changed, the processor 120 may generate a grid image based on the changed direction. According to an embodiment, the processor 120 may generate changed second images 420-4 and 420-6 including the changed grid image.

Referring to FIGS. 9A, 9B, and/or 9C, the processor 120 may generate third images 430-1, 430-2, 430-3, 430-4, 430-5, and 430-6. The third image 430 may be, for example, a synthesized image of the first image 410 and the second image 420. According to an embodiment, the second image 420 may include a plurality of line segments, and the processor 120 may overlay the second image 420 on at least a partial area on the first image 410 to generate a third image 430. According to an embodiment, the third image 430 may be an image in which the second image 420 is overlaid on the first image 410.

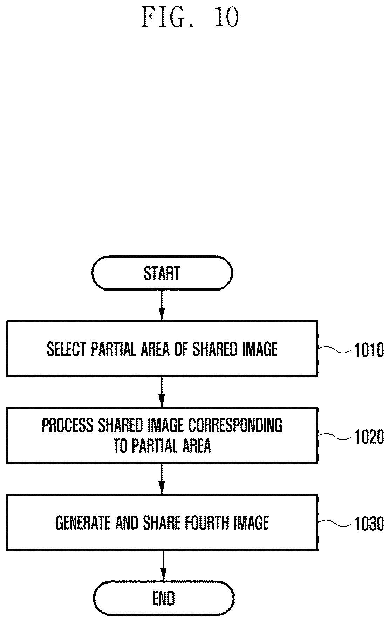

FIG. 10 is a flowchart illustrating operation of generating a fourth image by an electronic device according to an embodiment of the disclosure.

Referring to FIG. 10, operation for generating a fourth image by the electronic device (e.g., the electronic device 101 of FIG. 3) may be described by each operation of the processor (e.g., the processor 120 of FIG. 3) of the electronic device 101. The sequence of each operation of FIG. 10 and/or part of the operation may be changed.

With reference to operation 1010, the processor 120 may select a partial area (e.g., third area) of the shared image. The shared image may include an image, for example, a first image (e.g., the first image 410 of FIG. 4), a second image (e.g., the second image 420 of FIG. 4), and/or a third image (e.g., the third image 430 of FIG. 4), shared by the electronic device 101 with the external electronic device (e.g., the server device 220 and/or the external electronic device 230 of FIG. 2). The third area may be at least one area of a plurality of areas (e.g., second area), that is, at least a portion of a plurality of second areas in the first image 410 divided by the second image 420. According to an embodiment, the second image 420 may be a grid-shaped image, and an area (e.g., first area) in which the second image 420 is formed among the first image 410 may be divided into a plurality of second area by a grid image. According to an embodiment, the third area may include an area, in which at least one grid is formed, included in the grid image. According to an embodiment, the processor 120 may receive an input for selecting the third area using an input module (e.g., the input module 160 of FIG. 3), and identify the third area based on the input.

With reference to operation 1020, the processor 120 may process a shared image corresponding to the selected third area. According to an embodiment, the processor 120 may process at least a portion of the first image 410 corresponding to the third area. Image processing may include, for example, enlarging an image, changing an image, or converting an image. For example, the processor 120 may enlarge at least a portion of the first image 410 corresponding to the third area. According to an embodiment, the processor 120 may process (e.g., blind processing) at least a portion of the first image 410 corresponding to the third area to be invisible. According to an embodiment, the processor 120 may process (e.g., blind processing) an area other than the third area in the first image 410 to be invisible.

With reference to operation 1030, the processor 120 may generate a fourth image corresponding to the third area. According to an embodiment, the fourth image may be an image generated corresponding to the third area. For example, the fourth image may include a new grid image. According to an embodiment, the processor 120 may generate a grid image dividing the third area into a plurality of areas corresponding to the third area. According to an embodiment, the processor 120 may synthesize the first image 410 processed corresponding to the third area to generate a fourth image. For example, the fourth image may include an image in which at least a portion of the first image 410 is blinded or enlarged. According to an embodiment, the processor 120 may display the generated fourth image using the display module 160. According to an embodiment, the processor 120 may transmit the generated fourth image to the server (e.g., the server device 220 of FIG. 2) and/or the external electronic device (e.g., the external electronic device 230 of FIG. 2) using the communication module 190.

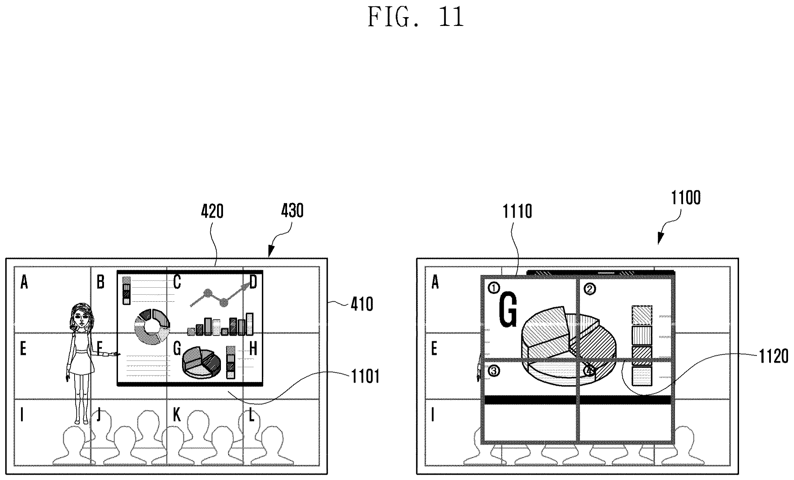

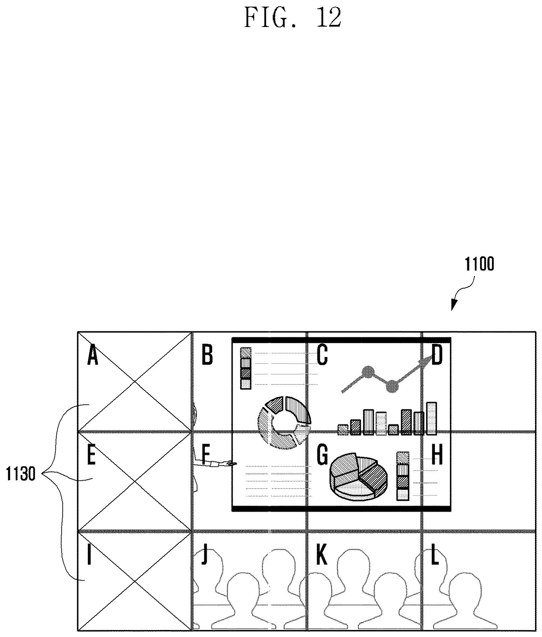

FIGS. 11 and 12 illustrate a fourth image according to various embodiments of the disclosure.

Referring to FIGS. 11 and/or 12, the processor (e.g., the processor 120 of FIG. 3) of the electronic device (e.g., the electronic device 101 of FIG. 3) may process a shared image (e.g., the first image 410, the second image 420, and/or the third image 430) to generate a fourth image 1100. The processor 120 may select a partial area (e.g., third area) of the shared image. The shared image may include an image, for example, the first image 410, the second image 420, and/or the third image 430, shared by the electronic device 101 with the external electronic device (e.g., the server device 220 and/or the external electronic device 230 of FIG. 2). The third area may be at least one area of a plurality of areas (e.g., second area), that is, at least a portion of a plurality of second areas in the first image 410 divided by the second image 420. For example, the plurality of second areas may be an inner area of the grid, and the third area may be at least one of the plurality of second areas.

Referring to FIG. 11, the third area selected by the processor 120 may be an inner area of a G grid 1101 among a plurality of grid inner areas. According to various embodiments, a fourth image 1100 may include an enlarged image 1110 acquired by enlarging at least a partial area of the first image 410. According to an embodiment, the processor 120 may process at least a portion of the first image 410 corresponding to the third area. Image processing may include, for example, enlarging an image, changing an image, or converting an image. For example, the processor 120 may enlarge at least a portion of the first image 410 corresponding to the third area. With reference to FIG. 11, the fourth image 1110 may include an enlarged image 1110 of at least a partial area of the first image 410 corresponding to an inner area of the G grid 1101.

Referring to FIG. 11, the fourth image 1100 may be an image generated corresponding to the third area. For example, the fourth image may include a new grid image 1120. According to an embodiment, the processor 120 may generate a new grid image 1120 dividing the third area into a plurality of areas corresponding to the third area.

Referring to FIG. 12, the fourth image 1100 may include at least a portion of the first image 410 processed by the processor 120 corresponding to the third area. For example, the fourth image 1100 may include an image in which at least a portion of the first image 410 is blinded or enlarged. With reference to FIG. 12, the third area may be an inner area 1130 of a grid A, a grid E, and a grid I. At least a partial area of the first image 410 corresponding to the third area 1130 may be blinded. According to an embodiment, the fourth image 410 may include a blinded image area.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 210), comprising:
a communication circuitry (190) configured to establish a communication connection with at least one external electronic device (102, 108);
a display (160); and
a processor (120) operatively connected with the communication circuitry (190) and the display (160),
wherein the processor (120) is configured to:
transmit a first image (410) to the at least one external electronic device (102, 108) using the communication circuitry (190) and output the first image (410) to the display (160),
select a first area, which is at least a partial area of the output first image (410),
generate a second image (420) including a contour of the first area and at least one line dividing the first area into a plurality of second areas, the second image (420) including symbols or characters to distinguish, identify, or indicate the plurality of second areas,
generate a third image (430) in which the first image (410) and the second image (420) are synthesized, and
transmit the third image (430) to the at least one external electronic device (102, 108) and output the third image (430) to the display (160), wherein
the communication connection is a video conference, an online class, or a video call.

2. The electronic device of claim 1, wherein the second image comprises a grid-shaped image.

3. The electronic device of any one of preceding claims, wherein the processor is further configured to generate the second image based on at least one of a size of the first image, a size of the first area, or a shape of the first area.

4. The electronic device of any one of preceding claims, wherein the processor is further configured to determine at least one of the number of the plurality of divided areas or a size of each of the plurality of areas based on at least one of a size of the first image, a size of the first area, or a shape of the first area.

5. The electronic device of any one of preceding claims, wherein the processor is further configured to:
perform image analysis on the first image to identify at least one image object included in the first image,
identify a target image object among the at least one image object, and
select the first area including at least the target image object.

6. The electronic device of claim 5, wherein the processor is further configured to:
identify a contour area of the target image object, and
generate the second image based on at least one of a size of the contour area or a shape of the contour area.

7. The electronic device of claim 5, further comprising an input module configured to receive a user's input,
wherein the processor is further configured to:
receive an input for selecting at least one target image object among at least one image object identified by the image analysis using the input module, and
identify the target image object based on the input.

8. The electronic device of claim 5, wherein the processor is further configured to:
identify at least one of a direction change or a position change of the target object,
change the second image based on at least one of the direction change or the position change, and
transmit the changed second image to the external electronic device and output the changed second image to the display.

9. The electronic device of claim 5, wherein the processor is further configured to:
generate modeling information acquired by 3D modeling the target image object,
generate a second image based on the modeling information, and
render the second image in two dimensions, transmit the rendered second image to the external electronic device, and output the rendered second image to the display.

10. The electronic device of any one of preceding claims, wherein the processor is further configured to:
identify a third area, which is at least one area of the plurality of second areas,
generate a fourth image by processing at least one among at least a portion of the first image or at least a portion of the second image corresponding to the third area, and
transmit the generated fourth image to the external electronic device.

11. The electronic device of claim 10, wherein the fourth image comprises an image in which at least a portion of the first image corresponding to the third area is processed to be invisible or an image in which at least a portion of the first image corresponding to the remaining area excluding the third area is processed to be invisible.

12. The electronic device of claim 10, wherein the fourth image comprises an image in which at least a portion of the first image corresponding to the third area is enlarged.

13. The electronic device of claim 10, wherein the fourth image comprises a line dividing at least a portion of the first image corresponding to the third area into a plurality of detailed areas.

14. The electronic device of claim 10, further comprising an input module,
wherein the processor is configured to:
receive an input for selecting the third area using the input module, and
identify the third area based on the input.

15. A method for an electronic device (101, 210) to share a video image, the method comprising:
establishing a communication connection with at least one external electronic device (102, 108);
transmitting a first image (410) to the external electronic device (102, 108) and outputting the first image (410);
selecting a first area, which is at least a partial area of the output first image (410);
generating a second image (420) including a contour of the first area and at least one line dividing the first area into a plurality of second areas, the second image (420) including symbols or characters to distinguish, identify, or indicate the plurality of second areas;
generating a third image (430) in which the first image (410) and the second image (420) are synthesized and
transmitting the third image (430) to the at least one external electronic device (102, 108) and outputting the third image (430), wherein
the communication connection is a video conference, an online class, or a video call.

## Patentansprüche

1. Elektronische Vorrichtung (101,210), umfassend:
eine Kommunikationsschaltung (190), die dazu konfiguriert ist, eine Kommunikationsverbindung mit mindestens einer externen elektronischen Vorrichtung (102, 108) herzustellen;
eine Anzeige (160); und
einen Prozessor (120), der mit der Kommunikationsschaltung (190) und der Anzeige (160) wirkverbunden ist,
wobei der Prozessor (120) zu Folgendem konfiguriert ist:
Übertragen ein ersten Bildes (410) an die mindestens eine externe elektronische Vorrichtung (102, 108) unter Verwendung der Kommunikationsschaltung (190) und Ausgeben des ersten Bildes (410) an die Anzeige (160),
Auswählen eines ersten Bereichs, der mindestens ein Teilbereich des ausgegebenen ersten Bildes (410) ist,
Generieren eines zweiten Bildes (420), das eine Kontur des ersten Bereichs und mindestens eine Linie beinhaltet, die den ersten Bereich in eine Vielzahl von zweiten Bereichen unterteilt, wobei das zweite Bild (420) Symbole oder Zeichen beinhaltet, um die Vielzahl von zweiten Bereichen zu unterscheiden, zu identifizieren oder anzugeben,
Generieren eines dritten Bildes (430), in dem das erste Bild (410) und das zweite Bild (420) synthetisiert sind, und
Übertragen des dritten Bildes (430) an die mindestens eine externe elektronische Vorrichtung (102, 108) und Ausgeben des dritten Bildes (430) an die Anzeige (160), wobei die Kommunikationsverbindung eine Videokonferenz, ein Online-Kurs oder ein Videoanruf ist.

2. Elektronische Vorrichtung nach Anspruch 1, wobei das zweite Bild ein gitterförmiges Bild umfasst.

3. Elektronische Vorrichtung nach einem der vorhergehenden Ansprüche, wobei der Prozessor ferner dazu konfiguriert ist, das zweite Bild basierend auf mindestens einer von einer Größe des ersten Bildes, einer Größe des ersten Bereichs oder einer Form des ersten Bereichs zu generieren.

4. Elektronische Vorrichtung nach einem der vorhergehenden Ansprüche, wobei der Prozessor ferner dazu konfiguriert ist, mindestens einer von der Anzahl der Vielzahl von unterteilten Bereichen oder einer Größe jedes der Vielzahl von Bereichen basierend auf mindestens einer von einer Größe des ersten Bildes, einer Größe des ersten Bereichs oder einer Form des ersten Bereichs zu bestimmen.

5. Elektronische Vorrichtung nach einem der vorhergehenden Ansprüche, wobei der Prozessor ferner zu Folgendem konfiguriert ist:
Durchführen einer Bildanalyse an dem ersten Bild, um mindestens ein Bildobjekt zu identifizieren, das in dem ersten Bild beinhaltet ist,
Identifizieren eines Zielbildobjekts aus dem mindestens einen Bildobjekt, und
Auswählen des ersten Bereichs, der mindestens das Zielbildobjekt beinhaltet.

6. Elektronische Vorrichtung nach Anspruch 5, wobei der Prozessor ferner zu Folgendem konfiguriert ist:
Identifizieren eines Konturbereichs des Zielbildobjekts, und
Generieren des zweiten Bildes basierend auf mindestens einer von einer Größe des Konturbereichs oder einer Form des Konturbereichs.

7. Elektronische Vorrichtung nach Anspruch 5, ferner umfassend ein Eingabemodul, das dazu konfiguriert ist, eine Eingabe eines Benutzers zu empfangen,
wobei der Prozessor ferner zu Folgendem konfiguriert ist:
Empfangen einer Eingabe zum Auswählen mindestens eines Zielbildobjekts aus mindestens einem Bildobjekt, das durch die Bildanalyse unter Verwendung des Eingabemoduls identifiziert wird, und
Identifizieren des Zielbildobjekts basierend auf der Eingabe.

8. Elektronische Vorrichtung nach Anspruch 5, wobei der Prozessor ferner zu Folgendem konfiguriert ist:
Identifizieren mindestens einer von einer Richtungsänderung oder einer Positionsänderung des Zielobjekts,
Ändern des zweiten Bildes basierend auf mindestens einer von der Richtungsänderung oder der Positionsänderung, und
Übertragen des geänderten zweiten Bildes an die externe elektronische Vorrichtung und Ausgeben des geänderten zweiten Bildes an die Anzeige.

9. Elektronische Vorrichtung nach Anspruch 5, wobei der Prozessor ferner zu Folgendem konfiguriert ist:
Generieren von Modellierungsinformationen, die durch 3D-Modellieren des Zielbildobjekts erfasst werden,
Generieren eines zweiten Bildes basierend auf den Modellierungsinformationen und
Rendern des zweiten Bildes in zwei Dimensionen, Übertragen des gerenderten zweiten Bildes an die externe elektronische Vorrichtung und Ausgeben des gerenderten zweiten Bildes an die Anzeige.

10. Elektronische Vorrichtung nach einem der vorhergehenden Ansprüche, wobei der Prozessor ferner zu Folgendem konfiguriert ist:
Identifizieren eines dritten Bereichs, der mindestens ein Bereich der Vielzahl von zweiten Bereichen ist,
Generieren eines vierten Bildes durch Verarbeiten mindestens eines aus mindestens einem Abschnitt des ersten Bildes oder mindestens einem Abschnitt des zweiten Bildes, der dem dritten Bereich entspricht, und
Übertragen des generierten vierten Bildes an die externe elektronische Vorrichtung.

11. Elektronische Vorrichtung nach Anspruch 10, wobei das vierte Bild ein Bild, in dem mindestens ein Abschnitt des ersten Bildes, der dem dritten Bereich entspricht, verarbeitet wird, um unsichtbar zu sein, oder ein Bild, in dem mindestens ein Abschnitt des ersten Bildes, der dem verbleibenden Bereich mit Ausnahme des dritten Bereichs entspricht, verarbeitet wird, um unsichtbar zu sein, umfasst.

12. Elektronische Vorrichtung nach Anspruch 10, wobei das vierte Bild ein Bild umfasst, in dem mindestens ein Abschnitt des ersten Bildes, der dem dritten Bereich entspricht, vergrößert ist.

13. Elektronische Vorrichtung nach Anspruch 10, wobei das vierte Bild eine Linie umfasst, die mindestens einen Abschnitt des ersten Bildes, der dem dritten Bereich entspricht, in eine Vielzahl von Detailbereichen unterteilt.

14. Elektronische Vorrichtung nach Anspruch 10, ferner umfassend ein Eingabemodul,
wobei der Prozessor zu Folgendem konfiguriert ist:
Empfangen einer Eingabe zum Auswählen des dritten Bereichs unter Verwendung des Eingabemoduls, und
Identifizieren des dritten Bereichs basierend auf der Eingabe.

15. Verfahren für eine elektronische Vorrichtung (101, 210) zum gemeinsamen Benutzen eines Videobildes, wobei das Verfahren Folgendes umfasst:
Herstellen einer Kommunikationsverbindung mit mindestens einer externen elektronischen Vorrichtung (102, 108);
Übertragen eines ersten Bildes (410) an die externe elektronische Vorrichtung (102, 108) und Ausgeben des ersten Bildes (410);
Auswählen eines ersten Bereichs, der mindestens ein Teilbereich des ausgegebenen ersten Bildes (410) ist;
Generieren eines zweiten Bildes (420), das eine Kontur des ersten Bereichs und mindestens eine Linie beinhaltet, die den ersten Bereich in eine Vielzahl von zweiten Bereichen unterteilt, wobei das zweite Bild (420) Symbole oder Zeichen beinhaltet, um die Vielzahl von zweiten Bereichen zu unterscheiden, zu identifizieren oder anzugeben;
Generieren eines dritten Bildes (430), in dem das erste Bild (410) und das zweite Bild (420) synthetisiert sind, und
Übertragen des dritten Bildes (430) an die mindestens eine externe elektronische Vorrichtung (102, 108) und Ausgeben des dritten Bildes (430), wobei
die Kommunikationsverbindung eine Videokonferenz, ein Online-Kurs oder ein Videoanruf ist.

## Revendications

1. Dispositif électronique (101, 210) comprenant :
des circuits de communication (190) configurés pour établir une connexion de communication avec au moins un dispositif électronique externe (102, 108) ;
un dispositif d'affichage (160) ; et
un processeur (120) connecté fonctionnellement aux circuits de communication (190) et au dispositif d'affichage (160),
dans lequel le processeur (120) est configuré pour :
transmettre une première image (410) à l'au moins un dispositif électronique externe (102, 108) à l'aide des circuits de communication (190) et délivrer en sortie la première image (410) au dispositif d'affichage (160),
sélectionner une première zone, qui est au moins une zone partielle de la première image de sortie (410),
générer une deuxième image (420) comprenant un contour de la première zone et au moins une ligne divisant la première zone en une pluralité de deuxièmes zones, la deuxième image (420) comprenant des symboles ou des caractères pour distinguer, identifier ou indiquer la pluralité de deuxièmes zones,
générer une troisième image (430) où sont synthétisées la première image (410) et la deuxième image (420), et
transmettre la troisième image (430) à l'au moins un dispositif électronique externe (102, 108) et délivrer en sortie la troisième image (430) au dispositif d'affichage (160), dans lequel la connexion de communication est une vidéoconférence, un cours en ligne ou un appel vidéo.

2. Dispositif électronique de la revendication 1, dans lequel la deuxième image comprend une image en forme de grille.

3. Dispositif électronique de l'une quelconque des revendications précédentes, dans lequel le processeur est en outre configuré pour générer la deuxième image sur la base d'au moins l'une d'une taille de la première image, d'une taille de la première zone ou d'une forme de la première zone.

4. Dispositif électronique de l'une quelconque des revendications précédentes, dans lequel le processeur est en outre configuré pour déterminer au moins l'un du nombre de la pluralité de zones divisées ou d'une taille de chacune de la pluralité de zones sur la base d'au moins l'une d'une taille de la première image, d'une taille de la première zone ou d'une forme de la première zone.

5. Dispositif électronique de l'une quelconque des revendications précédentes, dans lequel le processeur est en outre configuré pour :
réaliser une analyse d'image sur la première image pour identifier au moins un objet d'image compris dans la première image,
identifier un objet d'image cible parmi l'au moins un objet d'image, et
sélectionner la première zone comprenant au moins l'objet d'image cible.

6. Dispositif électronique de la revendication 5, dans lequel le processeur est en outre configuré pour :
identifier une zone de contour de l'objet d'image cible, et
générer la deuxième image sur la base d'au moins l'une d'une taille de la zone de contour ou d'une forme de la zone de contour.

7. Dispositif électronique de la revendication 5, comprenant en outre un module de saisie configuré pour recevoir une saisie utilisateur,
dans lequel le processeur est en outre configuré pour :
recevoir une saisie destinée à sélectionner au moins un objet d'image cible parmi au moins un objet d'image identifié par l'analyse d'image à l'aide du module de saisie, et
identifier l'objet d'image cible sur la base de la saisie.

8. Dispositif électronique de la revendication 5, dans lequel le processeur est en outre configuré pour :
identifier au moins l'une d'une modification de direction ou d'une modification de position de l'objet cible,
modifier la deuxième image sur la base d'au moins l'une de la modification de direction ou de la modification de position, et
transmettre la deuxième image modifiée au dispositif électronique externe et délivrer en sortie la deuxième image modifiée sur le dispositif d'affichage.

9. Dispositif électronique de la revendication 5, dans lequel le processeur est en outre configuré pour :
générer des informations de modélisation acquises par modélisation 3D de l'objet d'image cible, générer une deuxième image sur la base des informations de modélisation, et
rendre la deuxième image en deux dimensions, transmettre la deuxième image rendue au dispositif électronique externe, et délivrer en sortie la deuxième image rendue sur le dispositif d'affichage.

10. Dispositif électronique de l'une quelconque des revendications précédentes, dans lequel le processeur est en outre configuré pour :
identifier une troisième zone, qui est au moins une zone de la pluralité de deuxièmes zones,
générer une quatrième image par traitement d'au moins l'une parmi au moins une partie de la première image ou au moins une partie de la deuxième image correspondant à la troisième zone, et
transmettre la quatrième image générée au dispositif électronique externe.

11. Dispositif électronique de la revendication 10, dans lequel la quatrième image comprend une image où au moins une partie de la première image correspondant à la troisième zone est traitée pour être invisible ou une image où au moins une partie de la première image correspondant à la zone restante à l'exclusion de la troisième zone est traitée pour être invisible.

12. Dispositif électronique de la revendication 10, dans lequel la quatrième image comprend une image où au moins une partie de la première image correspondant à la troisième zone est agrandie.

13. Dispositif électronique de la revendication 10, dans lequel la quatrième image comprend une ligne divisant au moins une partie de la première image correspondant à la troisième zone en une pluralité de zones détaillées.

14. Dispositif électronique de la revendication 10, comprenant en outre un module de saisie, dans lequel le processeur est configuré pour :
recevoir une saisie destinée à sélectionner la troisième zone à l'aide du module de saisie, et
identifier la troisième zone sur la base de la saisie.

15. Procédé permettant à un dispositif électronique (101, 210) de partager une image vidéo, le procédé comprenant :
l'établissement d'une connexion de communication avec au moins un dispositif électronique externe (102, 108) ;
la transmission d'une première image (410) au dispositif électronique externe (102, 108) et la délivrance en sortie de la première image (410) ;
la sélection d'une première zone, qui est au moins une zone partielle de la première image de sortie (410) ;
la génération d'une deuxième image (420) comprenant un contour de la première zone et au moins une ligne divisant la première zone en une pluralité de deuxièmes zones, la deuxième image (420) comprenant des symboles ou des caractères pour distinguer, identifier ou indiquer la pluralité de deuxièmes zones ;
la génération d'une troisième image (430) où sont synthétisées la première image (410) et la deuxième image (420) et
la transmission de la troisième image (430) à l'au moins un dispositif électronique externe (102, 108) et la délivrance en sortie de la troisième image (430), dans lequel
la connexion de communication est une vidéoconférence, un cours en ligne ou un appel vidéo.
